# EUROPEAN PATENT SPECIFICATION

(11) **EP 3 136 075 B1**
(45) Date of publication and mention of the grant of the patent: **14.11.2018**
(21) Application number: 16185461.7
(22) Date of filing: 24.08.2016
(51) Int. Cl.: G01M 3/28, E03B 7/07

(54) **METHOD FOR DETECTION OF LEAKAGE IN A WATER INSTALLATION**
VERFAHREN ZUR LECKDETEKTION IN EINER WASSERANLAGE
PROCÉDÉ DE DÉTECTION DE FUITE DANS UNE INSTALLATION D'EAU

(30) Priority: 27.08.2015 DK 201500519
(43) Date of publication of application: 01.03.2017
(73) Proprietor: Dantaet A/S, 5250 Odense SV (DK)
(72) Inventor: Garnæs, Svend, 5250 Odense SV (DK)
(74) Representative: Larsen & Birkeholm A/S

(56) References cited:
- WO-A2-2008/023188
- WO-A2-2014/203246
- DE-A1-102008 037 138
- FR-A1- 2 778 726
- FR-A1- 2 865 804
- SE-B- 458 155
- US-A- 4 437 336
- US-A1- 2012 026 004
- US-B1- 6 377 190

## Description

### Prior art

The invention relates to a method for detection of a leakage in a water installation according to claim 1.

Methods are known for detection of this kind, see FR 2.865.804 where a method is described in which the delay units are activated after direct or indirect reception of pulse transmitted by a water meter when a given volume of liquid crosses said water meter.

DE10 2008 037138 describes a method using a single flow monitoring band, wherein a flow integrator and in-band timer are reset if a predetermined integrator threshold is not reached after a certain in-band time, and wherein, if the integrator threshold is reached, a warning is given to the user. In WO 2014/203246 a similar method for monitoring water flow is described. The monitor data is analyzed in order to diagnose the water flow and identify abnormal events, which may indicate that a leak is occurring. If a suspected leak is identified, the water flow can be shut down. Water flow shutdown can be done automatically by automatically controlling an electric water valve on the main water line.

However, both the technical effect and the combination of all the features in these known methods cause the presence of false alarms.

### The object of the invention

It is an object of the invention to improve the method of detection of leakage in a water installation which is achieved by the method of claim 1.

By using a compound in-band flow integrator the output of this is expected to be significantly less than using a conventional device, and further by the flow cells processing in turn, beginning with the monitoring band with the lowest flow limit the technical effect of this is a very specific sequence for the processing of the flow cells is obtained.

Finally it is appropriate measure, as described in claims 2 and 3 to tie in the alarm with the exceeding of each flow detection area's maximum flow.

### The drawing

Examples of the method, according to the invention, will in the following be described in detail referring to the drawing, which is in the graphic form of a coordinate system comprising an x-axis marking the time, and a y-axis marking the flow.
- fig. 1: shows an example of the use of a single monitoring area, where, with a bold solid line, the predetermined flow pattern is marked up, while the punctured line marks up the actual flow, which in this instance exceeds the determined upper limit, and therefore triggers an alarm and
- fig. 2: shows an example of a method, where the flow is separated into band shaped monitoring areas along the y-axis.

### Description of the exemplary embodiments

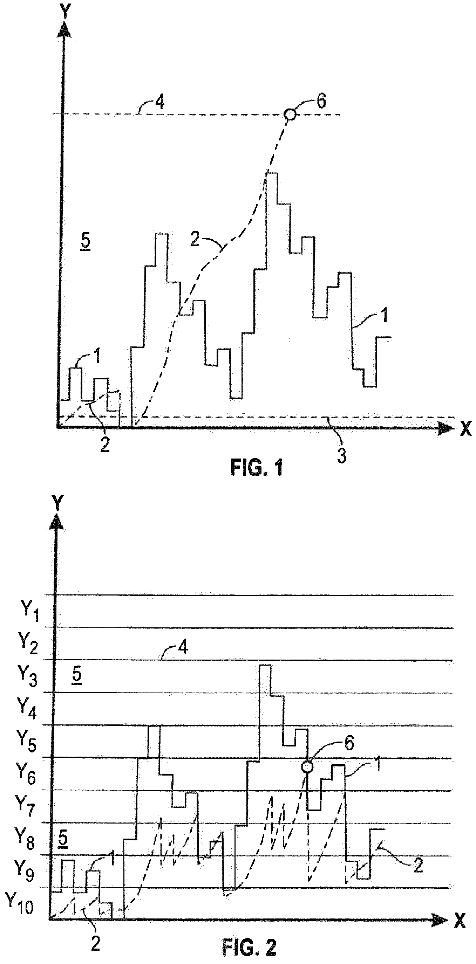

The integrated leakage detector employs a flow meter to establish whether flow in the monitored pipe is above or below a certain limiting value, see the base flow 3 shown in fig.1. An integrator (accumulator) fed by the flow meter is reset (zeroed) if the flow is below the base flow, and allowed to integrate the flow if it is above the base flow. If the integrator (accumulator) reaches a limiting value, see the protection level 4 in fig.1, leakage is assumed, and action is take n depending on the device, set-up and application in question. This mechanism is also known as a discharge monitor.

Since the integrating leakage detector often parameterizes both base flow and protection level, it is far more flexible and may be used to adequately protect entire dwellings. The worst case volume/mass of media escaping from a leak is known (the protection level.)

The integrating leakage detector is often supplemented by a seepage detector designed to detect leaks taking place at a rate below the base flow, and to take appropriate action in the event. The response time of a seepage detector is often quite substantial, between 12 and 48 hours.

Again because of parameterization this mechanism is highly flexible. Raising the base flow of the integrating leakage detector, according to the invention, permits more frequent zeroing of the integrator, allowing a lower protection level to be set.

However, the amount of media escaping before the seepage detector responds can then become larger than the protection level of the integrating leakage detector, so a tradeoff, or balancing act, is involved here.

Other supplementary mechanisms may be implemented in the form of constance average flow and peak flow detectors; all again fully parameterized.

Operating an integrating leakage detector in an installation with multiple active consumers necessitates high settings of both protection level and base flow. If the consumption exhibits a large day/night variation because there are few or no nighttime consumers, a second set of monitoring parameters is often brought into use under these circumstances, the switching between the parameter banks being governed by an internal clock, or by an external control signal from e.g. a burglar alarm (preferable). The bank labeled high phase is being used while many consumers occupy the building, while the bank labeled low phase is being used otherwise. Other arrangements, with more than two banks, are readily conceivable.
Owing to the large number of parameters, many of which in duplo owing to the above mentioned phase switching, an automatic run-in facility is often provided to assist in-situ parameter setting. During run-in, the various leakage detectors are deliberately passivated, while maximum excursions of flow and volume/mass measurements are recorded per high and low monitoring phase. Run-in duration is determined prior to commencement, and is typically four weeks and rarely less than one. When run-in expires, the system may calculate and automatically install appropriate monitoring parameters based on the key value recorded.

Because the integrator is zeroed only if the flow drops below the base flow, a zeroing event is comparatively rare, leading to high integrator values, necessitating a high protection level.

Workarounds in the form of extra flow monitors and phase switching while adding flexibility also contribute to overall system complexity and difficulty of use.

A dynamic base flow may be used for the integrating leakage detector (I.e. one which sets the base flow to a certain fraction of the instantaneous flow), but this on the other hand tends to zero the integrator too frequently, which means the contribution of minor leaks (i.e. leaks significantly smaller than planned consumption) may be disregarded for long periods of time.

Fig. 1 displays an example flow y vs. time x, and the output of the integrator used in an integrating leakage detector y vs. time x. From an initial value of 0 at t=0, the integrator output 2 increases until the flow drops below the base flow 3, at which point the integrator is reset (zeroed). After this event, flow 2 picks up and remains above the base flow 3 for a period long enough for the integrator output to intercept the protection level 4 and cause an alarm response when it reaches the upper protection level 4 in point 6.

Fig. 2 displays the performance of the compound integrator exposed to the same flow input 1 as seen on Fig. 1. The compound integrator output 2 is seen to undergo a partial reset whenever flow drops below a band 5 limit, resulting in the zeroing of that band's integrator. Consequently, the output value 2 of the compound integrator maintains a large headroom to the protection level 4.

The method according to the invention divides the flow regime into separate monitoring bands, the actual number of bands depending on the dynamic range of the flow meter.

Each band, as shown in fig. 2, is assigned an upper and a lower flow limit, and processing of measurements is performed individually for each monitoring band Y1 - Y10 in a specially crafted flow cell.

A typical but not exclusive choice of flow limits for the bands may look like this:

| Monitoring band | upper flow limit | lower flow limit |
|---|---|---|
| Y1 | infinity | 128 |
| Y2 | 128 | 64 |
| Y3 | 64 | 32 |
| Y4 | 32 | 16 |
| Y5 | 16 | 8 |
| Y6 | 8 | 4 |
| Y7 | 4 | 2 |
| Y8 | 2 | 1 |
| Y9 | 1 | ½ |
| Y10 | ½ | 1/4 |

Anything below the lower flow limit of band Y10 is for all practical purposes irrelevant, as it is outside the dynamic range of conceivable flow meters. However, should a flow meter become available with a larger dynamic range, the number of bands may simply be correspondingly increased.
Having infinity as the upper flow limit band number Y1 is merely a safeguard, as only exceptional instances will see flows exceeding the expected value of 256% nominal load.

The bands are used to demonstrate the principle of the invention. The use of other bandwidths, say 1/3 octave bands or two-octave bands, linearly or even irregularly spaced bands may be preferable in some applications.

The setting up of band flow limits is done when the leakage detector is initialized (powered up).

The method according to the invention further provides a central mechanism dubbed the flow cell for flow processing and registration of in-band consumption, in-band duration, and time since reset.

In addition to the upper and lower flow limit inputs, the flow cell is provided with the actual flow measurement from the flow meter, as well as the volume/mass accrued since the previous invokation. One flow cell is provided per monitoring band.

Flow cell processing takes place at fixed intervals depending on the nature of the flow meter (e.g. 0.1, 1, or 10 sec).
With each invocation, all flow cells are processed in turn, beginning with the monitoring band with the lowest flow limit, highest band number, and ending with the highest band number Y1.

The basic flow cell provides an in-band flow integrator, in-band timer, and time since reset. When fed an actual flow, the flow cell determines if in-band, out-of-band (low) or out-of- band (high) applies.

Processing then proceeds as follows:
Out of band (High):
   - Increment time since reset
   - Clear in-band timer
In band:
   - Increment time since reset
   - Increment in-band timer
   - And accrued volume/mass to flow integrator
Out-of-band (low):
   - Clear time since reset
   - Clear in-band timer
   - Clear flow integrator

It is thus seen that the accrued volume/mass supplied with the flow measurement, is added to the flow integrator of exactly one monitoring band, and that the flow integrator of each band will be reset when actual flow drops below the bands lower limit.

The compound integrator comprises the sum of the contents of all band flow integrators at any time. It serves the same purpose as the accumulator of the integrating leakage detector, only now with the refinement that each of its band components may be reset as flow conditions allow, and that therefore the maximum value seen at the output of the compound integrator is expected to be significantly less, all other things being equal.

In effect the invention provides many flow levels (one per band) at which the compound integrator can be partially reset. When the compound integrator reaches the protection level, a leakage is assumed, and the appropriate action is taken, depending on the device, set-up and application in question. This mechanism constitutes a new and improved discharge monitor.

An adjustable alarm delay, or hold-off may be introduced, spanning one or more flow cell invocations, to see if the compound integrator will be partially reset in the immediate future, obviating the need for an alarm response.

A linear (finite element circular buffer) averaging of the contents of the compound integrator may be introduced ahead of the comparison with the protection level, to see if the compound integrator will be partially reset in the immediate future, obviating the need for an alarm response.

The high/low phase parameter bank switching described under the integrating leakage detector may be applied to this invention as well.

The run-in facility described under the integrating leakage detector may be applied to this invention as well.

Seepage (or systematic consumption) may be assumed if time since reset in any band exceeds the equivalent of 12h/24H (or any other sane value). If systematic consumption is present, the volume/mass contributions from the affected band and lower bands must be disregarded (not compounded) by the discharge monitor.

Constance may be assumed if in-band time of any band exceeds a preset value.

In addition to the compound integrator, limits (protection levels) may be set for the flow integrator in each band, if desired.

The run-in facility described under the integrating leakage detector may be applied to individual band monitors, if maximum hold registers are provided in each monitoring band for volume/mass, in-band time and time reset, for high and low phase separately.

The method according to the invention performs comparison with integrating leakage detector:
- In any given set-up, the invention will record smaller overall discharge
- In any given set-up, the invention may use lower protection level
- In any given set-up, the invention may tolerate more consumers
- In some installations, the invention may provide ample protection without the introduction of phase switching.

### Additional advantages:

- Individual band monitoring may provide better protection in some applications.

### Derived advantages:

- The performance advantage may be translated to commercial and logistical advantage in that a wider range of commonplace, less expansive flow meters (lower impulse rates) can be used with the invention.

## Claims

1. Method for detection of a leakage in a water installation comprising a flow monitor for determining the flow during a flow time interval, and for detection of whether the monitored flow lies within a pre-determined flow limit; the method comprising the steps of:
- dividing the flow regime into separate flow monitoring bands (5), where each flow monitoring band (5) comprises an upper and a lower flow limit (4); and where the number of bands (5) are defined as a function of the dynamic range of the flow monitor,
- providing one flow cell per flow monitoring band (5) having an in-band flow integrator, in-band timer and time since reset, and processing said flow cells in turn, beginning with the monitoring band (5) with the lowest flow limit, wherein processing comprises the steps of:
- the flow cell determining if in-band, out-band (low) of out-of-band (high) applies,
- if out-of-band high: Increment time since reset, Clear in-band timer,
- if in-band: Increment time since reset, increment in-band timer, add accrued volume/mass to flow integrator,
- if out-of-band (low): Clear time since reset, clear in-band time, clear flow integrator,
- and using a compound integrator to receive and sum the accrued volume or mass from each flow cell integrator at any time.

2. Method according to claim 1, wherein an adjustable alarm delay is introduced, spanning one or more flow cell invocations, to see if the compound integrator will be partially reset in the immediate future, thereby obviating the need for an alarm response.

3. Method according to claim 1 and 2, wherein a linear averaging of the contents of the compound integrator may be introduced ahead of the comparison with the pre-determined limit, to see if the compound integrator will be partially reset in the immediate future, obviating the need for an alarm response.

## Patentansprüche

1. Verfahren zur Leckdetektion in einer Wasseranlage, umfassend einen Strömungsmonitor zum Bestimmen der Strömung während eines Strömungszeitintervalls und zum Detektieren, ob die überwachte Strömung innerhalb einer zuvor festgelegten Strömungsgrenze liegt; wobei das Verfahren die folgenden Schritte umfasst:
- Teilen des Strömungsregimes in separate Strömungsüberwachungsbereiche (5), wobei jeder Strömungsüberwachungsbereich (5) eine obere und eine untere Strömungsgrenze (4) umfasst; und wobei die Anzahl an Bereichen (5) in Abhängigkeit der dynamischen Spanne des Strömungsmonitors definiert ist,
- Bereitstellen einer Strömungszelle pro Strömungsüberwachungsbereich (5), einen Strömungsintegrator innerhalb eines Bereichs, einen Timer innerhalb eines Bereichs und eine Zeit seit der Zurücksetzung aufweisend, und Verarbeiten der Strömungszellen der Reihe nach, beginnend mit dem Überwachungsbereich (5) mit der niedrigsten Strömungsgrenze, wobei das Verarbeiten die folgenden Schritte umfasst:
die Strömungszelle bestimmt, ob innerhalb eines Bereichs, außerhalb eines Bereichs (niedrig) von außerhalb eines Bereichs (hoch) zutrifft,
wenn außerhalb eines Bereichs hoch: Inkrementieren der Zeit seit der Zurücksetzung, Löschen des Timers innerhalb eines Bereichs,
wenn innerhalb eines Bereichs: Inkrementieren der Zeit seit der Zurücksetzung, Inkrementieren des Timers innerhalb eines Bereichs, Hinzufügen von angesammeltem Volumen/angesammelter Masse zu Strömungsintegrator,
wenn außerhalb eines Bereichs (niedrig): Löschen der Zeit seit der Zurücksetzung, Löschen der Zeit innerhalb eines Bereichs, Löschen des Strömungsintegrators, und
Verwenden eines Verbindungsintegrators, um das angesammelte Volumen oder die angesammelte Masse aus jedem Strömungszellintegrator zu einer beliebigen Zeit aufzunehmen und zu summieren.

2. Verfahren nach Anspruch 1, wobei eine einstellbare Alarmverzögerung eingeführt wird, die eine oder mehrere Strömungszellenaufrufe umspannt, um zu sehen, ob der Verbindungsintegrator in der unmittelbaren Zukunft teilweise zurückgesetzt wird, wodurch der Bedarf an einer Alarmreaktion umgangen wird.

3. Verfahren nach Anspruch 1 und 2, wobei eine lineare Mittelung der Inhalte des Verbindungsintegrators vor dem Vergleich mit der zuvor festgelegten Grenze eingeführt werden kann, um zu sehen, ob der Verbindungsintegrator in der unmittelbaren Zukunft teilweise zurückgesetzt wird, wodurch der Bedarf an einer Alarmreaktion umgangen wird.

## Revendications

1. Procédé pour la détection d'une fuite dans une installation d'eau comprenant un dispositif de surveillance d'écoulement permettant de déterminer l'écoulement pendant un intervalle de temps d'écoulement, et pour détecter si l'écoulement surveillé se trouve dans une limite d'écoulement prédéterminée ; le procédé comprenant les étapes de :
- division du régime d'écoulement en bandes séparées de surveillance de l'écoulement (5), où chaque bande de surveillance de l'écoulement (5) comprend une limite supérieure et une limite inférieure d'écoulement (4) ; et où le nombre des bandes (5) sont définies en fonction de la plage dynamique du dispositif de surveillance d'écoulement,
- fourniture d'une cellule d'écoulement par bande de surveillance d'écoulement (5), possédant un intégrateur d'écoulement intra-bande, une minuterie intra-bande et le temps écoulé depuis la réinitialisation, et le traitement desdites cellules d'écoulement tour à tour, en commençant par la bande de surveillance (5) ayant la limite d'écoulement la plus basse, dans lequel le traitement comprend les étapes suivantes :
pour la cellule d'écoulement, le fait de déterminer s'il s'agit d'intra-bande, de hors-bande (bas) ou de hors-bande (haut),
s'il s'agit de hors-bande haut : augmentation du temps écoulé depuis la réinitialisation, effacement de la minuterie intra-bande,
s'il s'agit d'intra-bande : augmentation du temps écoulé depuis la réinitialisation, augmentation de la minuterie intra-bande, ajout du volume et de la masse cumulés à l'intégrateur d'écoulement,
s'il s'agit de hors-bande bas : effacement du temps écoulé depuis la réinitialisation, effacement de la minuterie intra-bande, effacement de l'intégrateur d'écoulement,
et utilisation d'un intégrateur composé pour recevoir et additionner à tout moment le volume ou la masse cumulés provenant de chaque intégrateur de cellule d'écoulement.

2. Procédé selon la revendication 1, dans lequel on introduit une temporisation d'alarme réglable recouvrant une ou plusieurs invocations de cellule d'écoulement, pour voir si l'intégrateur composé va être partiellement réinitialisé dans l'avenir immédiat, supprimant ainsi la nécessité de réagir à l'alarme.

3. Procédé selon les revendications 1 et 2, dans lequel on peut introduire une moyenne linéaire du contenu de l'intégrateur composé avant la comparaison avec la limite prédéterminée, pour voir si l'intégrateur composé va être partiellement réinitialisé dans l'avenir immédiat, supprimant ainsi la nécessité de réagir à l'alarme.
